# EUROPÄISCHE PATENTSCHRIFT

(11) **EP 3 266 292 B1**
(45) Veröffentlichungstag und Bekanntmachung des Hinweises auf die Patenterteilung: **05.01.2022**
(21) Anmeldenummer: 17177977.0
(22) Anmeldetag: 26.06.2017
(51) Int. Cl.: A01B 73/04, A01D 34/66, A01D 34/86

(54) **LANDWIRTSCHAFTLICHES ANHÄNGEGERÄT UND ZUGGESPANN MIT EINEM SOLCHEN ANHÄNGEGERÄT**
AGRICULTURAL TRAILER AND TRACTION COMBINATION WITH SUCH A TRAILER
OUTIL AGRICOLE TRACTÉ ET AGRICOLE ET ATTELAGE COMPRENANT UN TEL OUTIL TRACTÉ

(30) Priorität: 07.07.2016 DE 102016112532
(43) Veröffentlichungstag der Anmeldung: 10.01.2018
(73) Patentinhaber: CLAAS Saulgau GmbH, 88348 Bad Saulgau (DE)
(72) Erfinder: Ober, Martin, 78736 Epfendorf-Trichtingen (DE); Jerg, Markus, 88633 Heiligenberg (DE); Speer, Christian, 88348 Bad Saulgau (DE)

(56) Entgegenhaltungen:
- EP-A1- 3 005 853
- DE-A1-102005 062 033
- DE-A1-102013 111 669
- DE-T2- 69 106 197
- DE-T2- 69 307 556
- US-A1- 2015 189 831

## Beschreibung

Die Erfindung betrifft ein landwirtschaftliches Anhängegerät, insbesondere ein Mähwerk, nach Anspruch 1. Des Weiteren betrifft die Erfindung ein landwirtschaftliches Zuggespann mit einem solchen landwirtschaftlichen Anhängegerät.

Ein landwirtschaftliches Zuggespann verfügt über ein landwirtschaftliches Zugfahrzeug und ein von dem Zugfahrzeug gezogenes, landwirtschaftliches Anhängegerät. Beim landwirtschaftlichen Zugfahrzeug handelt es sich typischerweise um einen Traktor bzw. Schlepper. Bei dem vom Zugfahrzeug gezogenen landwirtschaftlichen Anhängegerät kann es sich um einen Schwader, einen Wender, ein Heckmähwerk oder um ein sonstiges vom Zugfahrzeug gezogenes Anhängegerät handeln, welches über eine große Arbeitsbreite verfügt, sodass das Anhängegerät in seiner Arbeitsstellung hinten seitlich gegenüber dem Zugfahrzeug deutlich vorsteht. Die hier vorliegende Erfindung bezieht sich insbesondere auf ein als Heckmähwerk ausgebildetes landwirtschaftliches Anhängegerät, welches vorzugsweise an einer allgemein bekannten Dreipunktanhängeeinrichtung eines Zugfahrzeugs, wie einem Traktor, aufnehmbar ist.

Um das landwirtschaftliche Anhängegerät mit Hilfe des Zugfahrzeugs nach dem Arbeitseinsatz auf öffentlichen Straßen transportieren zu können, ist das Arbeitsgerät aus der Arbeitsstellung heraus in eine Transportstellung verlagerbar, wobei das Anhängegerät in der Transportstellung definierte Maße, insbesondere eine definierte Breite und eine definierte Höhe, nicht überschreiten darf. Bei aus der Praxis bekannten Heckmähwerken, die über mindestens eine Mäheinheit verfügen, die in der Arbeitsstellung quer zur Fahrtrichtung des Zugfahrzeugs an den Seiten desselben vorstehen, sind die Mäheinheiten des Heckmähwerks entweder um eine horizontale, fahrtrichtungsparallele Achse aus einer horizontalen Ausrichtung in eine vertikale Ausrichtung nach oben verlagerbar oder alternativ über eine vertikale Achse nach hinten verlagerbar, sodass dann die Mäheinheiten des Heckmähwerks parallel zur Fahrtrichtung stehen.

Aus der DE 195 34 695 A1 ist ein als Heckmähwerk ausgebildetes landwirtschaftliches Anhängegerät bekannt, das zwischen einer Transportstellung und einer Arbeitsstellung um eine fahrtrichtungsparallele und demnach eine sich in oder in etwa in Fahrtrichtung erstreckende Schwenkachse verlagerbar ist, und zwar um einen Winkel von mehr als 90°, sodass sich das Anhängegerät in der Transportstellung in vertikaler, nämlich in vertikal-diagonaler, Richtung erstreckt. Hiermit kann in definiertem Umfang gewährleistet werden, dass das Anhängegerät in der Transportstellung eine definierte Höhe nicht überschreitet. Es besteht jedoch Bedarf daran, die Arbeitsbreite von Heckmähwerken weiter zu vergrößern und zwar derart, dass in der Transportstellung nach wie vor definierte Abmessungen, die aus straßenverkehrsrechtlichen Gründen eingehalten werden müssen, nicht überschritten werden, insbesondere eine definierte Transporthöhe, die nicht überschritten werden darf.

DE 10 2005 062 033 A1 offenbart eine Mähmaschine zum Anbau an eine Hubeinrichtung eines landwirtschaftlichen Trägerfahrzeugs mit einer Trag- und Führungseinrichtung als Verbindungsglied zwischen Mähmaschine und Trägerfahrzeug mit einem verschwenkbaren Auslegerarm zum Verklappen der Mäheinrichtung von einer etwa horizontalen Arbeitsstellung in eine angehobene Vorgewendeund/oder Transportstellung, wobei der Auslegerarm der Trageinrichtung zweiteilig ist und ein erstes und ein zweites Auslegerelement umfasst, wobei das erste Auslegerelement als Winkelhebel ausgebildet das Bindeglied zwischen der Tragkonstruktion und dem zweiten Auslegerelement ist und der Winkelhebel zwei beabstandete Drehgelenke aufweist, deren Gelenkachsen einen räumlichen Winkel zueinander einnehmen, wobei die Gelenkachse des ersten Drehgelenks in der Arbeitsstellung etwa in Fahrt- und Arbeitsrichtung verläuft und die zweite Gelenkachse im Wesentlichen aufrecht verläuft.

DE 691 06 197 T2 und DE 693 07 556 T2 offenbaren Heckmähwerke gemäß dem Oberbegriff des Anspruchs 1, die um eine fahrtrichtungsparallele Achse in eine Transportstellung nach oben verschwenkt werden können. Des Weiteren können diese Mähwerke um eine weitere, vertikale Achse mittig im Bereich der Kupplungseinrichtung mit dem Zugfahrzeug verschwenkt werden, um die Breite zu reduzieren.

Hiervon ausgehend liegt der vorliegenden Erfindung die Aufgabe zugrunde, ein neuartiges landwirtschaftliches Anhängegerät und ein neuartiges landwirtschaftliches Zuggespann zu schaffen.

Diese Aufgabe wird durch ein landwirtschaftliches Anhängegerät nach Anspruch 1 gelöst.

Erfindungsgemäß kann eine Anhängegeräteinheit eine Transportstellung einnehmen, in welcher dieselbe sich im Wesentlichen in vertikaler oder vertikal-diagonaler Richtung erstreckt, und zusätzlich um eine zweite Schwenkachse schwenkbar ist, dass die Anhängegeräteinheit in der Transportstellung bezogen auf die Fahrtrichtung nach hinten oder vorne verschwenkt ist.

Gemäß einer Ausführungsform ist die jeweilige Anhängegeräteinheit zwischen einer ersten Transportstellung und einer zweiten Transportstellung derart verlagerbar, dass die jeweilige Anhängegeräteinheit um eine zweite Schwenkachse zwischen den beiden Transportstellungen, in welchen sich die jeweilige Anhängegeräteinheit jeweils im Wesentlichen in vertikaler oder vertikal-diagonaler Richtung erstreckt, bezogen auf die Fahrtrichtung nach hinten und vorne schwenkbar ist.

Mit der Erfindung kann bei größerer Arbeitsbreite nach wie vor eine Transportstellung bereitgestellt werden, die straßenverkehrsrechtliche Vorschriften einhält. So verfügt das erfindungsgemäße Anhängegerät gemäß einer Ausführungsform über zwei unterschiedliche Transportstellungen, wobei in einer der beiden Transportstellungen das Anhängegerät nicht nur nach oben in eine vertikale bzw. vertikal-diagonale Ausrichtung geschwenkt ist, sondern zusätzlich auch nach hinten geschwenkt ist. Hiermit kann die Höhe des Anhängegeräts in einer der Transportstellungen reduziert werden.

Insbesondere ist die jeweilige Anhängegeräteinheit in der Arbeitsstellung um die zweite Schwenkachse zur Bereitstellung einer Anfahrsicherung zusätzlich auch nach hinten verlagerbar. Die zweite Schwenkachse dient demnach nicht nur der Verlagerung des Anhängegeräts zwischen den beiden Transportstellungen, sondern vielmehr auch in der Arbeitsstellung der Bereitstellung der Anfahrsicherung. Die zweite Schwenkachse erlaubt demnach zwei Bewegungen des Anhängegeräts, nämlich eine Bewegung, die dieselbe bei der Anfahrsicherung ausführt, sowie eine Bewegung, um das Anhängegerät zwischen den beiden Transportstellungen zu überführen. Hiermit kann eine besonders einfache und kompakte Bauform des Anhängegeräts bereitgestellt werden. Für die Bereitstellung der Verlagerung zwischen den beiden Transportstellungen sowie die für die Bereitstellung der Anfahrsicherungsverlagerung sind keine separaten Schwenkachsen erforderlich.

Nach der Erfindung weist die jeweilige Anhängegeräteinheit einen Ausleger auf, der an einem Grundrahmen des Anhängegeräts befestigt und um die erste Schwenkachse relativ zum Grundrahmen zwischen der Arbeitsstellung und der Transportstellung verlagerbar ist. Ein erstes Teil des Auslegers ist zusammen mit einem zweiten Teil desselben um die erste Schwenkachse relativ zum Grundrahmen und der zweite Teil des Auslegers ist zusätzlich um die zweite Schwenkachse relativ zum ersten Teil verlagerbar. Das zweite Teil des Auslegers der jeweiligen Anhängegeräteinheit ist in der Arbeitsstellung auch um die zweite Schwenkachse zur Bereitstellung der Anfahrsicherung verlagerbar. Auch diese

Details erlauben eine besonders einfache und kompakte Bauform des Anhängegeräts. Der Ausleger ist sowohl bei der Verlagerung zwischen den Transportstellungen als auch bei der Verlagerung unter Bereitstellung der Anfahrsicherung jeweils um die zweite Schwenkachse verlagerbar.

Vorzugsweise weist der jeweilige Ausleger für beide Transportstellungen jeweils eine Rastaufnahme und der Grundrahmen eine in der jeweiligen Transportstellung mit der jeweiligen Rastaufnahme zusammenwirkende Auflage auf. Dies ist zur Bereitstellung der beiden Transportstellungen besonders bevorzugt, da hierdurch eine konstruktiv einfache und robuste Bereitstellung der beiden Transportstellungen möglich ist.

Nach einer Weiterbildung der Erfindung ist ein doppeltwirkender Arbeitszylinder für die Verlagerung der jeweiligen Anhängegeräteinheit zwischen der ersten Transportstellung und der zweiten Transportstellung um die zweite Schwenkachse und ein einfachwirkender Arbeitszylinder zur Bereitstellung der Anfahrsicherungsverlagerung der jeweiligen Anhängegeräteinheit in der Arbeitsstellung um die zweite Schwenkachse vorhanden. Vorzugsweise sind dieser doppeltwirkende Arbeitszylinder und dieser einfachwirkende Arbeitszylinder für die Verlagerung der jeweiligen Anhängegeräteinheit um die zweite Schwenkachse zu einer Zylindereinheit zusammengefasst. Insbesondere sind dieser doppeltwirkende Arbeitszylinder und dieser einfachwirkende Arbeitszylinder Rücken an Rücken positioniert und miteinander verbunden. Der doppeltwirkende Arbeitszylinder für die Verlagerung des Auslegers zwischen den beiden Transportstellungen sowie der einfachwirkende Arbeitszylinder zur Bereitstellung der Anfahrsicherungsverlagerung des Auslegers sind zu der Zylindereinheit zusammengefasst. Hierdurch ist eine besonders kompakte Bauform des Anhängegeräts möglich. Insbesondere dann, wenn diese Arbeitszylinder Rücken an Rücken positioniert sind, kann mit denselben auf vorteilhafte Art und Weise die Verlagerung des Auslegers jeweils um die zweite Schwenkachse zwischen den Transportstellungen und in der Arbeitsstellung zur Gewährleistung der Anfahrsicherung realisiert werden.

Nach einer weiteren Weiterbildung weist die jeweilige Anhängegeräteinheit außen einen Schutzbügel auf, der zwischen einer Arbeitsstellung und einer Transportstellung um eine dritte Schwenkachse klappbar ist. Hierdurch kann die Höhe des Anhängegeräts in der Transportstellung weiter verringert werden.

Das erfindungsgemäße Zuggespann ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1a: eine Ansicht von hinten auf ein Zuggespann aus einem erfindungsgemäßen, als Heckmähwerk ausgebildeten Anhängegerät in einer Arbeitsstellung desselben zusammen mit einem Zugfahrzeug;
- Fig. 1b: eine Ansicht von oben auf das Zuggespann der Fig. 1a;
- Fig. 2a: eine Ansicht von hinten auf das Zuggespann in einer ersten Transportstellung des Anhängegeräts;
- Fig. 2b: eine Ansicht von der Seite auf das Zuggespann der Fig. 2a;
- Fig. 3a: eine Ansicht von hinten auf das Zuggespann in einer zweiten Transportstellung des Anhängegeräts;
- Fig. 3b: eine Ansicht von der Seite auf das Zuggespann der Fig. 3a;
- Fig. 4a: eine Ansicht von hinten auf das Zuggespann in der ersten Transportstellung des Anhängegeräts bei einen nicht in die Transportstellung geschwenktem Schutzbügel;
- Fig. 4b: eine Ansicht von der Seite auf das Zuggespann der Fig. 4a;
- Fig. 5: das Detail V der Fig. 3b; und
- Fig. 6: das Detail VI der Fig. 2b.

Die Erfindung betrifft ein landwirtschaftliches Anhängegerät für ein landwirtschaftliches Zugfahrzeug, insbesondere ein als Heckmähwerk ausgebildetes Anhängegerät.

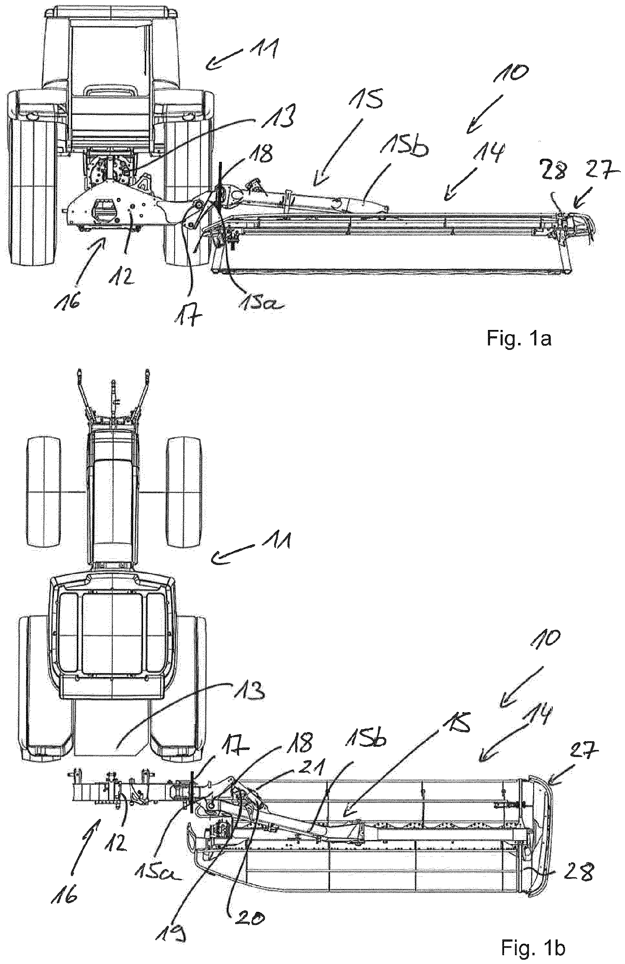

Fig. 1a bis 4b zeigen unterschiedliche Ansichten eines als Heckmähwerk 10 ausgebildeten, landwirtschaftlichen Anhängegeräts zusammen mit einem als Schlepper 11 ausgebildeten landwirtschaftlichen Zugfahrzeug. Das Heckmähwerk 10 ist über eine sogenannte Dreipunktaufnahme 12 desselben hinten an eine Anhängevorrichtung 13 des Schleppers 11 ankoppelbar, wobei jedoch Fig. 1a bis 4b zur Gewährleistung einer einfacheren Darstellung das Heckmähwerk 10 und den Schlepper 11 jeweils in einem Zustand zeigen, in welchem das Heckmähwerk 10 nicht an die entsprechende hintere Anhängevorrichtung 13 des Schleppers 11 angebunden ist, was in Fig. 1b, 2b, 3b und 4b durch einen Spalt bzw. einen entsprechenden Abstand zwischen der Dreipunktaufnahme 12 des Anhängegeräts 10 und einer Anhängevorrichtung 13 des Schleppers 11 erkennbar ist.

Wie bereits ausgeführt, ist das Heckmähwerk 10 im an den Schlepper 11 angekoppelten Zustand über seine Dreipunktaufnahme 12 an die Anhängevorrichtung 13 des Schleppers 11 angebunden, um vom Schlepper 11 fortbewegt zu werden.

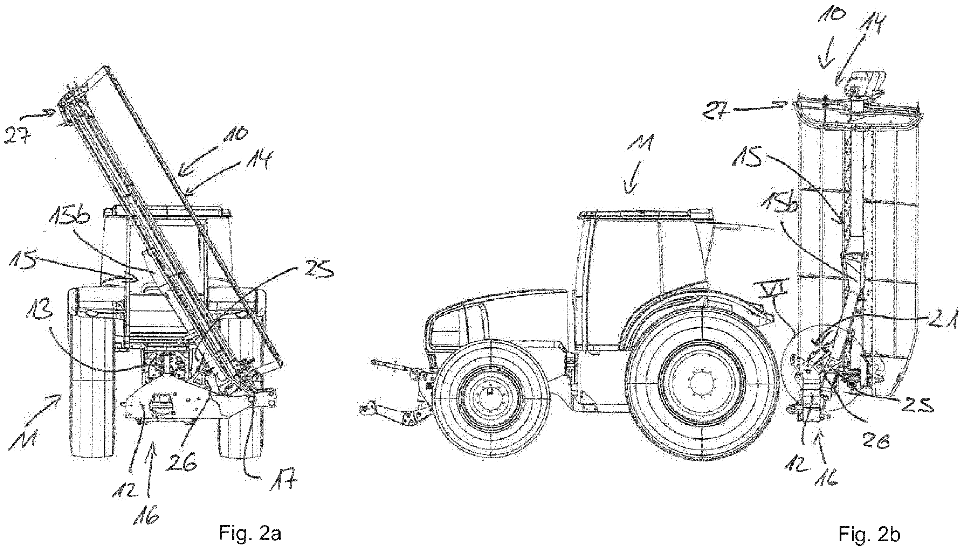

Das gezeigte Heckmähwerk 10 verfügt über eine Heckmähwerkeinheit 14, die in der in Fig. 1a, 1b gezeigten Arbeitsstellung an einer Seite gegenüber dem Schlepper 11 seitlich vorsteht. Die Heckmähwerkeinheit 14 verfügt über einen Ausleger 15, der an einem Grundrahmen 16 des Heckmähwerks 10 befestigt ist. Der Grundrahmen 16 des Heckmähwerks 10 stellt die Dreipunktaufnahme 12 bereit. Der Ausleger 15 der Heckmähwerkeinheit 14 ist derart gelenkig am Grundrahmen 16 des Heckmähwerks 10 befestigt, dass der Ausleger 15 der Heckmähwerkeinheit 14 relativ zum Grundrahmen 16 zur Verlagerung der Heckmähwerkeinheit 14 zwischen der in Fig. 1a, 1b gezeigten Arbeitsstellung sowie den in Fig. 2a bis 4b gezeigten Transportstellungen um mindestens 90°, vorzugsweise um mehr als 90°, um eine erste Schwenkachse 17 schwenkbar ist. Diese erste Schwenkachse 17 erstreckt sich in Fahrtrichtung oder in etwa in Fahrtrichtung und damit fahrtrichtungsparallel.

Zur Bereitstellung der Schwenkbewegung des Auslegers 15 der Heckmähwerkeinheit 14 zwischen der in Fig. 1a, 1b gezeigten Arbeitsstellung und den in Fig. 2a bis 4b gezeigten Transportstellungen umfasst das Heckmähwerk 10 einen doppeltwirkenden Arbeitszylinder, der einerseits am Grundrahmen 16, insbesondere an der Dreipunktaufnahme 12, und andererseits am Ausleger 15 der Heckmähwerkeinheit 14 angreift, wobei dieser doppeltwirkende Arbeitszylinder in den Figuren nicht sichtbar ist, da derselbe von Wandungen der Dreipunktaufnahme 12 bzw. des Grundrahmens 16 verdeckt ist. Wie am besten Fig. 2a, 3a und 4a entnommen werden kann, wird die Heckmähwerkeinheit 14 des Heckmähwerks 10 ausgehend von der in Fig. 1a, 1b gezeigten Arbeitsstellung in die in Fig. 2a bis 4b gezeigten Transportstellungen aus der in Fig. 1a, 1b gezeigten, horizontalen Ausrichtung um mehr als 90° in die jeweilige Transportstellung geschwenkt, nämlich in Fig. 2a bis 4b um etwa 110° bis 120°, sodass sich die Heckmähwerkeinheit 14 in der Transportstellung im Wesentlichen in vertikaler bzw. in vertikal-diagonaler Richtung erstreckt.

Durch das Schwenken der Heckmähwerkeinheit 14 um die erste Schwenkachse 17, die sich fahrtrichtungsparallel erstreckt, ausgehend von der in Fig. 1a, 1b gezeigten Arbeitsstellung in eine die in Fig. 2a bis 4b gezeigten Transportstellungen kann zum Transport insbesondere die Breite des Heckmähwerks 10 reduziert werden, um straßenverkehrsrechtliche Vorschriften einzuhalten.

Die Erfindung betrifft nun solche Details des Heckmähwerks 10, mit Hilfe derer die Höhe in der Transportstellung weiter reduziert werden kann.

Fig. 2a, 2b zeigen eine erste Transportstellung für die Heckmähwerkeinheit 14, in welcher dieselbe um die erste Schwenkachse 17 um mehr als 90° in die vertikal-diagonale Ausrichtung verschwenkt ist.

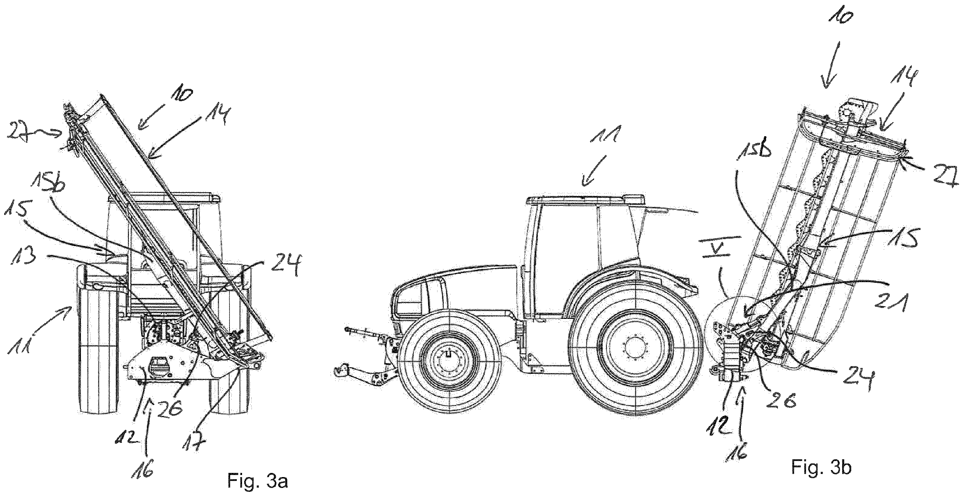

Zusätzlich zu dieser in Fig. 2a, 2b gezeigten ersten Transportstellung verfügt das Heckmähwerk 10 für die Heckmähwerkeinheit 14 über eine zweite Transportstellung, die in Fig. 3a, 3b gezeigt ist, wobei insbesondere einem Vergleich der Fig. 2b, 3b entnommen werden kann, dass die Heckmähwerkeinheit 14 des Heckmähwerks 10 in der zweiten Transportstellung der Fig. 3b gegenüber der ersten Transportstellung der Fig. 2b zusätzlich nach hinten geschwenkt ist. Durch dieses nach hinten Schwenken kann die Höhe in der Transportstellung weiter reduziert werden. Alternativ zum nach hinten Schwenken könnte die Heckmähwerkeinheit 14 zum Reduzieren der Transporthöhe nach vorne geschwenkt werden, wobei der Schwenkwinkel nach vorn durch die Fahrerkabine beschränkt ist.

Die Verlagerung bzw. das Schwenken der Heckmähwerkeinheit 14 zwischen den beiden Transportstellungen der Fig. 2a, 2b und 3a, 3b erfolgt um eine zweite Schwenkachse 18. Diese zweite Schwenkachse 18 ist zwischen zwei Abschnitten bzw. Teilen 15a, 15b des Auslegers 15 ausgebildet. Ein erstes Teil 15a des Ausleger 15 ist über die erste Schwenkachse 17 am Grundrahmen 16, insbesondere an der Dreipunktaufnahme 12 des Grundrahmens 16, angelenkt. Ein zweites Teil 15b des Auslegers 15 ist um die zweite Schwenkachse 18 an dem ersten Teil 15a des Auslegers 15 angelenkt.

Die zweite Schwenkachse 18 zwischen den beiden Teilen 15a, 15b des Auslegers 15 dient nicht nur der Verlagerung der Heckmähwerkeinheit 14 zwischen den beiden Transportstellungen, sondern vielmehr auch in der Arbeitsstellung der Fig. 1a, 1b zur Bereitstellung einer sogenannten Anfahrsicherung.

Dann, wenn in der Arbeitsstellung der Fig. 1a, 1b im Arbeitseinsatz die seitlich gegenüber dem Schlepper 11 vorstehende Heckmähwerkeinheit 14 des Heckmähwerks 10 mit einem Hindernis kollidiert, kann die Heckmähwerkeinheit 14 um diese zweite Schwenkachse 18 nach hinten ausweichen, um eine Beschädigung der Heckmähwerkeinheit 14 zu vermeiden.

Um die Verlagerung der Heckmähwerkeinheit 14 des Heckmähwerks 10 um die zweite Schwenkachse 18 zu ermöglichen, nämlich die Verlagerung des zweiten Teils 15b des Auslegers 15 relativ zum ersten Teils 15a des Auslegers 15 um die zweite Schwenkachse 18, sind zwei Arbeitszylinder vorhanden, nämlich ein einfachwirkender Arbeitszylinder 19 zur Gewährleistung der Anfahrsicherungsverlagerung sowie ein doppeltwirkender Arbeitszylinder 20 zur Gewährleistung der Verlagerung der Heckmähwerkeinheit 14 zur nach hinten geschwenkten Transportstellung.

Dabei sind die beiden Arbeitszylinder 19, 20, also der einfachwirkende Arbeitszylinder 19 für die Anfahrsicherungsverlagerung sowie der doppeltwirkende Arbeitszylinder 20 für die Verlagerung der Heckmähwerkeinheit 14 zwischen den Transportstellungen zu einer Zylindereinheit 21 zusammengefasst, die einerseits an dem ersten Teil 15a des Auslegers 15 und andererseits dem zweiten Teil 15b des Auslegers 15 angelenkt ist. Diese beiden Zylinder 19, 20 der Zylindereinheit 21 sind Rücken an Rücken angeordnet und fest zum Beispiel durch Verschweißen miteinander verbunden, wobei eine Kolbenstange 22 des einfachwirkenden Arbeitszylinders 19 für die Anfahrsicherungsverlagerung am ersten Teil 15a des Auslegers 15 und eine Kolbenstange 23 des doppeltwirkenden Arbeitszylinders 20 für die Verlagerung der Heckmähwerkeinheit 14 zwischen den beiden Transportstellungen gelenkig am zweiten Teil 15b des Auslegers 15 angreift.

Zur Gewährleistung des Anfahrschutzes bzw. der Anfahrsicherungsverlagerung der Heckmähwerkeinheit 14 in der in Fig. 1a, 1b gezeigten Arbeitsstellung ist demnach der einfachwirkende Zylinder 19 der Zylindereinheit 21 aktiv, der dann, wenn eine durch denselben vorgegebene Belastungsgrenze überschritten wird, ein nach hinten Verlagern der sich in der Arbeitsstellung befindlichen Heckmähwerkeinheit 14 ermöglicht.

Über den doppeltwirkenden Arbeitszylinder 20 der Zylindereinheit 21 kann die Heckmähwerkeinheit 14 zwischen den beiden Transportstellungen verlagert werden, und zwar zwischen den in Fig. 2a, 2b und Fig. 3a, 3b gezeigten beiden Transportstellungen, nämlich durch aktives Schwenken der Heckmähwerkeinheit 14 um die zweite Schwenkachse 18 nach vorne oder nach hinten, abhängig davon, ob die Heckmähwerkeinheit 14 ausgehend von der zweiten Transportstellung der Fig. 3b in die erste Transportstellung der Fig. 2b oder umgekehrt von der ersten Transportstellung der Fig. 2b in die zweite Transportstellung der Fig. 3b verlagert werden soll.

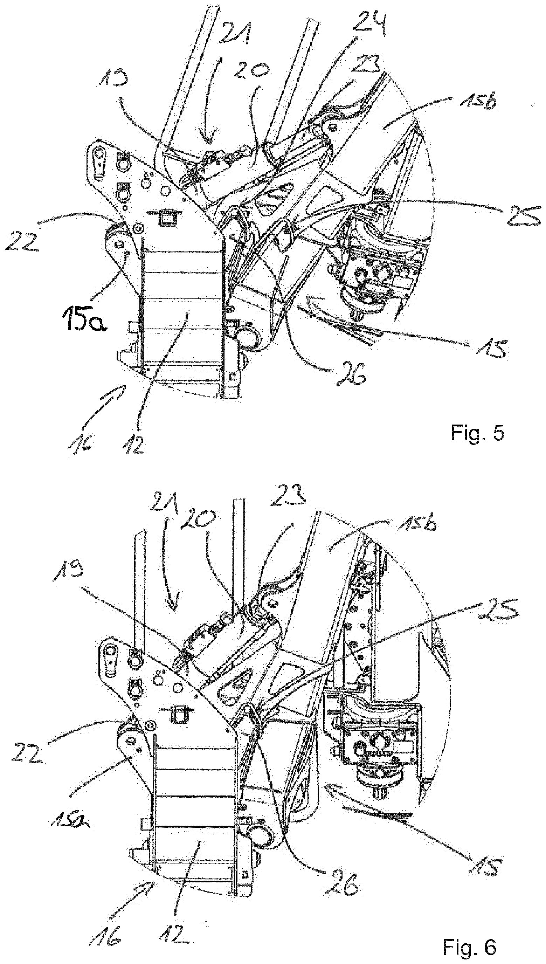

Wie am besten Fig. 5 und 6 entnommen werden kann, welche die Details IV und VI der Fig. 2b, 3b vergrößert zeigen, stellt der zweite Abschnitt 15b des Auslegers 15 für die beiden Transportstellungen Rastaufnahmen 24, 25 bereit, die mit einer Auflage 26 des Grundrahmens 16 zusammenwirken. Dann, wenn die Heckmähwerkeinheit 14 in der in Fig. 2a, 2b gezeigten ersten Transportstellung nach vorne verschwenkt ist, greift die Auflage 26 in die Rastaufnahme 25 ein (siehe Fig. 6). Dann hingegen, wenn die Heckmähwerkeinheit 14 in die zweite Transportstellung der Fig. 3b nach hinten verlagert ist, greift die Auflage 26 in die Rastaufnahme 24 ein (siehe Fig. 5).

Eine weitere Besonderheit des Heckmähwerks 10 besteht darin, dass zusätzlich ein in der Arbeitsstellung der Fig. 1a, 1b seitlich außen positionierter Schutzbügel 27 der Heckmähwerkeinheit 14 des Heckmähwerks 10 definiert in eine Transportstellung um eine dritte Schwenkachse 28 klappbar ist.

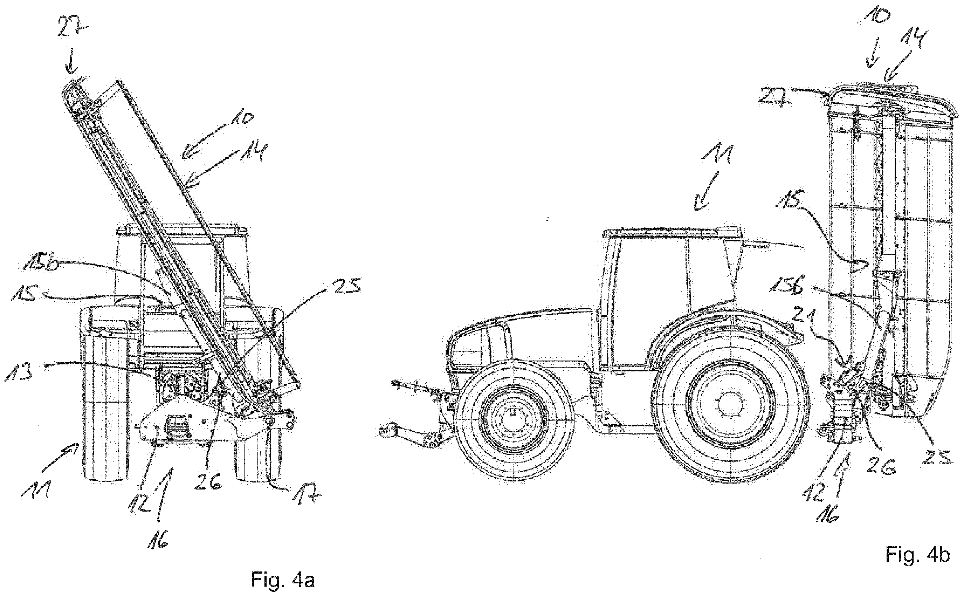

Fig. 4a, 4b zeigen in der ersten Transportstellung eine Höhe des Zuggespanns, die sich bei nicht in die Transportstellung verklapptem Schutzbügel ausbilden würde.

Einem Vergleich der Fig. 2a, 4a sowie Fig. 2b, 4b kann unmittelbar entnommen werden, dass dann, wenn auch der Schutzbügel 27 in seine definierte Transportstellung verklappt ist, die Höhe des Heckmähwerks 10 bzw. der Heckmähwerkeinheit 14 in der Transportstellung weiter reduziert werden kann.

Der Schutzbügel ist ausgehend von seiner Arbeitsstellung (siehe z. B. Fig. 1a, 1b, 4a, 4b) in seine Transportstellung (siehe z. B. Fig. 2a, 2b, 3a, 3b) um die Schwenkachse 28 um mehr als 90°, bevorzugt um mindestens 160° und besonders bevorzugt um mindestens 170°, klappbar, um so die Höhe in der Transportstellung zu reduzieren und die Breite in der Transportstellung nicht zu vergrößern.

Fig. 1a bis 6 zeigen demnach ein Heckmähwerk 10 mit einer Heckmähwerkeinheit 14, die zur Überführung von der Arbeitsstellung der Fig. 1a bis 1b in die in Fig. 2a bis 4b gezeigten beiden Transportstellungen um die erste, insbesondere fahrtrichtungsparallele, Schwenkachse 17 schwenkbar ist, nämlich von der in Fig. 1a, 1b gezeigten horizontalen Ausrichtung der Heckmähwerkeinheit 14 in die in Fig. 2a bis 4b gezeigte vertikal-diagonale Ausrichtung derselben.

Zusätzlich ist die Heckmähwerkeinheit 14 um die zweite Schwenkachse 18 zwischen den beiden Transportstellungen, nämlich der ersten Transportstellung der Fig. 2a, 2b bzw. 4a, 4b und der zweiten Transportstellung der Fig. 3a, 3b verlagerbar, und zwar von vorne nach hinten bzw. von hinten nach vorne. Durch Schwenken der Heckmähwerkeinheit 14 in die zweite Transportstellung der Fig. 3a, 3b nach hinten kann die Höhe in der Transportstellung reduziert werden.

Die Schwenkbewegung um die erste Schwenkachse 17 der Heckmähwerkeinheit 14 zwischen der Arbeitsstellung und der Transportstellung erfolgt mit Hilfe eines nicht sichtbaren, Arbeitszylinders. Die Schwenkbewegung der Heckmähwerkeinheit 14 um die zweite Schwenkachse 18 bei der Verlagerung derselben zwischen den beiden Transportstellungen erfolgt mit Hilfe eines doppeltwirkenden Arbeitszylinders 20, der mit dem einfachwirkenden Arbeitszylinder 19 zu einer Zylindereinheit 21 zusammengefasst ist, wobei der einfachwirkende Arbeitszylinder 19 der Bereitstellung der Anfahrsicherung in der Arbeitsstellung für die Heckmähwerkeinheit 14 dient.

Die zweite Schwenkachse 18, um die die Heckmähwerkeinheit 14 zwischen den beiden Transportstellungen verlagerbar ist, dient, wie bereits ausgeführt, auch der Bereitstellung der Anfahrsicherungsverlagerung der Heckmähwerkeinheit 14 in der Arbeitsstellung. Es müssen demnach für die Anfahrsicherung sowie für die Verlagerung der Heckmähwerkeinheit 14 zwischen den beiden Transportstellungen keine separaten Schwenkachsen bereitgehalten werden. Dies ist für einen besonders einfachen und kompakten konstruktiven Aufbau von Vorteil.

Zusätzlich ist der seitlich außen in der Arbeitsstellung der Heckmähwerkeinheit 14 positionierte Schutzbügel 27 schwenkbar bzw. klappbar, vorzugsweise um in etwa 170°. Dieses Schwenken des Schutzbügels 27 kann dabei entweder manuell oder über einen zusätzlichen Arbeitszylinder initiiert werden.

Im gezeigten Ausführungsbeispiel weist das Heckmähwerk 10 eine einzige Heckmähwerkeinheit 14 auf, die an einer Seite des Schleppers 11 gegenüber demselben in der Arbeitsstellung vorsteht. Im Unterschied hierzu ist es auch möglich, dass das Heckmähwerk 10 zwei derartige Heckmähwerkeinheiten 14 aufweist, die an jeweils einer Seite des Schleppers 11 gegenüber demselben vorstehen und jeweils um eine erste Schwenkachse 17 aus der Arbeitsstellung in die jeweilige Transportstellung verlagerbar sind. Derartige Heckmähwerke werden als Schmetterlings-Heckmähwerke bezeichnet, wobei die oben beschriebenen Details auf analoge Art und Weise auch für ein derartiges Heckmähwerk mit zwei Heckmähwerkeinheiten 14 Verwendung finden. Der einzige Unterschied ist lediglich darin zu sehen, dass dann, wenn das Heckmähwerk 10 zwei Heckmähwerkeinheiten 14 aufweist, der Winkel, um den dieselben jeweils um die erste Schwenkachse 17 verlagert werden, geringer ist als im gezeigten Ausführungsbeispiel. In den meisten Fällen werden die Heckmähwerkeinheiten 14 eines solchen Schmetterlings-Heckmähwerks um etwa 80° bis 110° um die erste Schwenkachse 17 verlagert. In diesem Fall werden dann die Heckmähwerkeinheiten 14 zur Gewährleistung einer zulässigen Höhe in der Transportstellung gegenüber Fig. 3 etwas weiter nach hinten geschwenkt als dann, wenn das Heckmähwerk 10 lediglich eine Heckmähwerkeinheit 14 aufweist.

### Bezugszeichenliste

- 10: Anhängegerät / Heckmähwerk
- 11: Zugfahrzeug / Schlepper
- 12: Dreipunktaufnahme
- 13: Anhängevorrichtung
- 14: Anhängegeräteinheit / Heckmähwerkeinheit
- 15: Ausleger
- 15a: Auslegerteil
- 15b: Auslegerteil
- 16: Grundrahmen
- 17: Schwenkachse
- 18: Schwenkachse
- 19: Arbeitszylinder
- 20: Arbeitszylinder
- 21: Zylindereinheit
- 22: Zylinderkolben
- 23: Zylinderkolben
- 24: Rastaufnahme
- 25: Rastaufnahme
- 26: Auflage
- 27: Schutzbügel
- 28: Schwenkachse

## Patentansprüche

1. Landwirtschaftliches Anhängegerät (10), insbesondere Heckmähwerk, für ein landwirtschaftliches Zugfahrzeug, welches hinten an das Zugfahrzeug (11) ankoppelbar und vom Zugfahrzeug (11) bewegbar ist, wobei das Anhängegerät (10) mindestens eine Anhängegeräteinheit (14) aufweist, die zwischen einer Arbeitsstellung und einer ersten und einer zweiten Transportstellung derart verlagerbar ist, dass die jeweilige Anhängegeräteinheit (14) aus der Arbeitsstellung, in welcher dieselbe sich im Wesentlichen in horizontaler Richtung erstreckt und seitlich gegenüber dem Zugfahrzeug (11) vorsteht, um eine sich in oder in etwa in Fahrtrichtung erstreckende erste Schwenkachse (17) um etwa 90°, vorzugsweise um mehr als 90°, nach oben in eine erste Transportstellung, in welcher dieselbe sich im Wesentlichen in vertikaler oder vertikal-diagonaler Richtung erstreckt, schwenkbar ist, wobei die jeweilige Anhängegeräteinheit (14) zusätzlich derart verlagerbar ist, dass die jeweilige Anhängegeräteinheit (14) um eine zweite Schwenkachse (18) schwenkbar ist, **dadurch gekennzeichnet, dass** die jeweilige Anhängegeräteinheit (14) einen Ausleger (15) aufweist, der an einem Grundrahmen (16) des Anhängegeräts (10) befestigt und um die erste Schwenkachse (17) relativ zum Grundrahmen (16) zwischen der Arbeitsstellung und den Transportstellungen verlagerbar ist, wobei ein Arbeitszylinder für die Verlagerung des Auslegers (15) zwischen der Arbeitsstellung und den Transportstellungen einerseits am Ausleger (15) und andererseits am Grundrahmen (16) angelenkt ist und wobei ein erstes Teil (15a) des Auslegers (15) zusammen mit einem zweiten Teil (15b) desselben um die erste Schwenkachse (17) relativ zum Grundrahmen (16) und das zweite Teil (15b) des Auslegers (15) zusätzlich um die zweite Schwenkachse (18) relativ zum ersten Teil (15a) verlagerbar ist, so dass die Anhängegeräteinheit (14) in der zweiten Transportstellung bezogen auf die Fahrtrichtung nach hinten oder vorne verschwenkt ist.

2. Anhängegerät nach Anspruch 1, **dadurch gekennzeichnet, dass** das zweite Teil (15b) des Auslegers (15) der jeweiligen Anhängegeräteinheit (14) in der Arbeitsstellung auch um die zweite Schwenkachse (18) relativ zum ersten Teil (15a) zur Bereitstellung einer Anfahrsicherung verlagerbar ist.

3. Anhängegerät nach Anspruch 1 oder 2, **gekennzeichnet durch** einen doppeltwirkenden Arbeitszylinder (20) für die Verlagerung der jeweiligen Anhängegeräteinheit (14) zwischen der ersten Transportstellung und der zweiten Transportstellung um die zweite Schwenkachse (18).

4. Anhängegerät nach Anspruch 2, **gekennzeichnet durch** einen einfachwirkenden Arbeitszylinder (19) zur Bereitstellung einer Anfahrsicherungsverlagerung der jeweiligen Anhängegeräteinheit (14) in der Arbeitsstellung um die zweite Schwenkachse (18).

5. Anhängegerät nach den Ansprüchen 3 und 4, **dadurch gekennzeichnet, dass** der doppeltwirkende Arbeitszylinder (20) und der einfachwirkende Arbeitszylinder (19) für die Verlagerung der jeweiligen Anhängegeräteinheit (14) um die zweite Schwenkachse (18) zu einer Zylindereinheit (21) zusammengefasst sind, die einerseits am ersten Teil (15a) des Auslegers (15) der jeweiligen Anhängegeräteinheit (14) und andererseits am zweiten Teil (15b) des Auslegers (15) der jeweiligen Anhängegeräteinheit (14) angelenkt ist.

6. Anhängegerät nach Anspruch 5, **dadurch gekennzeichnet, dass** der doppeltwirkende Arbeitszylinder (20) und der einfachwirkende Arbeitszylinder (19) Rücken an Rücken positioniert und miteinander verbunden sind, wobei eine Kolbenstange (23) des doppeltwirkenden Arbeitszylinders (20) am zweiten Teil (15b) und eine Kolbenstange (22) des einfachwirkenden Arbeitszylinders (19) am ersten Teil (15a) des Auslegers (15) angelenkt ist.

7. Anhängegerät nach einem der Ansprüche 1 bis 6, **dadurch gekennzeichnet, dass** der jeweilige Ausleger (15) für beide Transportstellungen jeweils eine Rastaufnahme (24, 25) und der Grundrahmen (16) eine in der jeweiligen Transportstellung mit der jeweiligen Rastaufnahme (24, 25) zusammenwirkende Auflage (26) aufweist.

8. Anhängegerät nach einem der Ansprüche 1 bis 7, **dadurch gekennzeichnet, dass** die jeweilige Anhängegeräteinheit (14) außen einen Schutzbügel (27) aufweist, der zwischen einer Arbeitsstellung und einer Transportstellung um eine dritte Schwenkachse (28) klappbar ist.

9. Anhängegerät nach Anspruch 8, **dadurch gekennzeichnet, dass** der Schutzbügel (27) um mehr als 90°, bevorzugt um mindestens 160° und besonders bevorzugt um mindestens 170°, klappbar ist.

10. Landwirtschaftliches Zuggespann, mit einem landwirtschaftlichen Zugfahrzeug (11) und mit einem am Zugfahrzeug (11) montierten landwirtschaftlichen Anhängegerät (10), **dadurch gekennzeichnet, dass** das Anhängegerät (10) nach einem der Ansprüche 1 bis 9 ausgebildet ist.

## Claims

1. Agricultural trailed implement (10), in particular rear-mounted mower, for an agricultural tractor vehicle, which trailed implement is couplable to the rear of the tractor vehicle (11) and is movable by the tractor vehicle (11), wherein the trailed implement (10) has at least one trailed implement unit (14) which is shiftable between a working position and a first and a second transport position in such a manner that the respective trailed implement unit (14) is pivotable out of the working position, in which it extends substantially in the horizontal direction and protrudes laterally in relation to the tractor vehicle (11), upwards by approximately 90°, preferably by more than 90°, about a first pivot axis (17) extending in or approximately in the direction of travel into a first transport position in which said trailed implement unit extends substantially in a vertical or vertically diagonal direction, wherein the respective trailed implement unit (14) is additionally shiftable in such a manner that the respective trailed implement unit (14) is pivotable about a second pivot axis (18), **characterized in that** the respective trailed implement unit (14) has a boom (15) which is fastened to a basic frame (16) of the trailed implement (10) and is shiftable about the first pivot axis (17) relative to the basic frame (16) between the working position and the transport positions, wherein a working cylinder for shifting the boom (15) between the working position and the transport positions is coupled at one end to the boom (15) and at the other end to the basic frame (16), and wherein a first part (15a) of the boom (15) together with a second part (15b) of same is shiftable about the first pivot axis (17) relative to the basic frame (16) and the second part (15b) of the boom (15) is additionally shiftable about the second pivot axis (18) relative to the first part (15a) such that the trailed implement unit (14) is pivoted rearwards or forwards with respect to the direction of travel in the second transport position.

2. Trailed implement according to Claim 1, **characterized in that** the second part (15b) of the boom (15) of the respective trailed implement unit (14) is also shiftable in the working position about the second pivot axis (18) relative to the first part (15a) in order to provide collision protection.

3. Trailed implement according to Claim 1 or 2, **characterized by** a double-action working cylinder (20) for shifting the respective trailed implement unit (14) about the second pivot axis (18) between the first transport position and the second transport position.

4. Trailed implement according to Claim 2, **characterized by** a single-action working cylinder (19) for providing shifting of the collision protection of the respective trailed implement unit (14) about the second pivot axis (18) in the working position.

5. Trailed implement according to Claims 3 and 4, **characterized in that** the double-action working cylinder (20) and the single-action working cylinder (19) for shifting the respective trailed implement unit (14) about the second pivot axis (18) are combined to form a cylinder unit (21) which is coupled at one end to the first part (15a) of the boom (15) of the respective trailed implement unit (14) and at the other end to the second part (15b) of the boom (15) of the respective trailed implement unit (14).

6. Trailed implement according to Claim 5, **characterized in that** the double-action working cylinder (20) and the single-action working cylinder (19) are positioned back to back and connected to each other, wherein a piston rod (23) of the double-action working cylinder (20) is coupled to the second part (15b) and a piston rod (22) of the single-action working cylinder (19) is coupled to the first part (15a) of the boom (15).

7. Trailed implement according to one of Claims 1 to 6, **characterized in that** the respective boom (15) for the two transport positions in each case has a latching receptacle (24, 25), and the basic frame (16) has a support (26) interacting with the respective latching receptacle (24, 25) in the respective transport position.

8. Trailed implement according to one of Claims 1 to 7, **characterized in that** the respective trailed implement unit (14) has a protective clip (27) on the outside which is foldable about a third pivot axis (28) between a working position and a transport position.

9. Trailed implement according to Claim 8, **characterized in that** the protective clip (27) is foldable by more than 90°, preferably by at least 160° and particularly preferably by at least 170°.

10. Agricultural vehicle and trailer combination, with an agricultural tractor vehicle (11) and with an agricultural trailed implement (10) mounted on the tractor vehicle (11), **characterized in that** the trailed implement (10) is designed according to one of Claims 1 to 9.

## Revendications

1. Appareil remorqué agricole (10), notamment faucheuse arrière, pour un tracteur agricole, qui peut être accouplé au tracteur (11) à l'arrière et qui peut être déplacé par le tracteur (11), l'appareil remorqué (10) comprenant au moins une unité d'appareil remorqué (14), qui peut être déplacée entre une position de travail et une première et une deuxième position de transport, de telle sorte que l'unité d'appareil remorqué respective (14) peut pivoter à partir de la position de travail, dans laquelle celle-ci s'étend essentiellement en direction horizontale et fait saillie latéralement par rapport au tracteur (11), autour d'un premier axe de pivotement (17) s'étendant dans ou approximativement dans la direction de marche, d'environ 90°, de préférence de plus de 90°, vers le haut dans une première position de transport, dans laquelle celle-ci s'étend essentiellement dans la direction verticale ou verticale-diagonale, l'unité d'appareil remorqué respective (14) pouvant en outre être déplacée de telle sorte que l'unité d'appareil remorqué respective (14) peut pivoter autour d'un deuxième axe de pivotement (18), **caractérisé en ce que** l'unité d'appareil remorqué respective (14) comprend un bras (15), qui est fixé à un cadre de base (16) de l'appareil remorqué (10) et est déplaçable autour du premier axe de pivotement (17) par rapport au cadre de base (16) entre la position de travail et les positions de transport, un cylindre de travail pour le déplacement du bras (15) entre la position de travail et les positions de transport étant articulé d'une part sur le bras (15) et d'autre part sur le cadre de base (16), et une première partie (15a) du bras (15) conjointement avec une deuxième partie (15b) de celuici étant déplaçables autour du premier axe de pivotement (17) par rapport au cadre de base (16) et la deuxième partie (15b) du bras (15) étant en outre déplaçable autour du deuxième axe de pivotement (18) par rapport à la première partie (15a), de telle sorte que l'unité d'appareil remorqué (14) est pivotée vers l'arrière ou vers l'avant par rapport à la direction de marche dans la deuxième position de transport.

2. Appareil remorqué selon la revendication 1, **caractérisé en ce que** la deuxième partie (15b) du bras (15) de l'unité d'appareil remorqué respective (14) dans la position de travail est également déplaçable autour du deuxième axe de pivotement (18) par rapport à la première partie (15a) pour fournir une sécurité anticollision.

3. Appareil remorqué selon la revendication 1 ou 2, **caractérisé par** un cylindre de travail à effet double (20) pour le déplacement de l'unité d'appareil remorqué respective (14) entre la première position de transport et la deuxième position de transport autour du deuxième axe de pivotement (18).

4. Appareil remorqué selon la revendication 2, **caractérisé par** un cylindre de travail à simple effet (19) pour fournir un déplacement avec sécurité anticollision de l'unité d'appareil remorqué respective (14) dans la position de travail autour du deuxième axe de pivotement (18).

5. Appareil remorqué selon les revendications 3 et 4, **caractérisé en ce que,** pour le déplacement de l'unité d'appareil remorqué respective (14) autour du deuxième axe de pivotement (18), le cylindre de travail à double effet (20) et le cylindre de travail à simple effet (19) sont combinés en une unité de cylindre (21), qui est articulée d'une part sur la première partie (15a) du bras (15) de l'unité d'appareil remorqué respective (14) et d'autre part sur la deuxième partie (15b) du bras (15) de l'unité d'appareil remorqué respective (14) .

6. Appareil remorqué selon la revendication 5, **caractérisé en ce que** le cylindre de travail à double effet (20) et le cylindre de travail à simple effet (19) sont positionnés dos à dos et reliés l'un à l'autre, une tige de piston (23) du cylindre de travail à double effet (20) étant articulée sur la deuxième partie (15b) et une tige de piston (22) du cylindre de travail à simple effet (19) étant articulée sur la première partie (15a) du bras (15).

7. Appareil remorqué selon l'une quelconque des revendications 1 à 6, **caractérisé en ce que** le bras respectif (15) comprend pour les deux positions de transport respectivement un logement d'encliquetage (24, 25) et le cadre de base (16) comprend un support (26) coopérant dans la position de transport respective avec le logement d'encliquetage respectif (24, 25).

8. Appareil remorqué selon l'une quelconque des revendications 1 à 7, **caractérisé en ce que** l'unité d'appareil remorqué respective (14) comprend en outre un étrier de protection (27), qui est rabattable entre une position de travail et une position de transport autour d'un troisième axe de pivotement (28).

9. Appareil remorqué selon la revendication 8, **caractérisé en ce que** l'étrier de protection (27) est rabattable sur plus de 90°, de préférence sur au moins 160° et de manière particulièrement préférée sur au moins 170°.

10. Attelage agricole, comprenant un tracteur agricole (11) et un appareil remorqué agricole (10) monté sur le tracteur (11), **caractérisé en ce que** l'appareil remorqué (10) est configuré selon l'une quelconque des revendications 1 à 9.
